Europäisches Patentamt

European Patent Office

Office européen des brevets

(11) Veröffentlichungsnummer: **0 464 581 B1**

(19)

(12) **EUROPÄISCHE PATENTSCHRIFT**

(45) Veröffentlichungstag der Patentschrift: **22.02.95**

(51) Int. Cl.⁶: **C08J 9/12**, //C08L25/04

(21) Anmeldenummer: **91110431.3**

(22) Anmeldetag: **25.06.91**

(54) **Verfahren zur Herstellung von Schaumstoffplatten mit hoher Druckfestigkeit.**

(30) Priorität: **04.07.90 DE 4021273**

(43) Veröffentlichungstag der Anmeldung:
**08.01.92 Patentblatt 92/02**

(45) Bekanntmachung des Hinweises auf die
Patenterteilung:
**22.02.95 Patentblatt 95/08**

(84) Benannte Vertragsstaaten:
**BE DE FR GB IT NL SE**

(56) Entgegenhaltungen:
**WO-A-87/01711**
**FR-A- 2 235 152**
**FR-A- 2 235 157**
**GB-A- 1 230 992**

(73) Patentinhaber: **BASF Akfiengesellschaft**
**Carl-Bosch-Strasse 38**
**D-67063 Ludwigshafen (DE)**

(72) Erfinder: **Voelker, Heinz, Dr.**
**Woogstrasse 37**
**W-6703 Limburgerhof (DE)**
Erfinder: **Alicke, Gerhard**
**Brunnerstrasse 11**
**W-6520 Worms 1 (DE)**
Erfinder: **Schuch, Horst, Dr.**
**Kanzelbachstrasse 21**
**W-6804 Ilvesheim (DE)**
Erfinder: **Weilbacher, Manfred, Dr.**
**Taunusstrasse 27**
**W-6710 Frankenthal (DE)**
Erfinder: **Weber, Reinhold**
**An der Steinenernen Bruecke 11**
**W-6704 Mutterstadt (DE)**

**Beschreibung**

Gegenstand der Erfindung ist ein Verfahren zur Herstellung von Schaumstoffplatten mit hoher Druckfestigkeit durch Extrusion eines Gemisches aus einem Styrolpolymerisat, einem Treibmittel und gegebenenfalls üblichen Zusatzstoffen.

Für die Herstellung von Schaumstoffen auf Basis von Styrolpolymerisaten ist eine Vielzahl von Treibmitteln vorgeschlagen worden. Bevorzugt wird Methylchlorid verwendet. Wegen seiner Toxizität sind jedoch extreme Vorsichtsmaßnahmen sowohl bei der Herstellung als auch bei Nachlagerung des Schaumstoffs erforderlich. Der Schaumstoff zeigt zudem bei erhöhten Temperaturen ein beträchtliches Schwindungsverhalten. Bei Verwendung von Chlorfluorkohlenwasserstoffen, wie Dichlordifluormethan, als Treibmittel erhält man Schaumstoffe, die sich bei erhöhten Temperaturen ausdehnen. Gemische aus etwa gleichen Teilen Methylchlorid und Dichlordifluormethan führen zwar zu dimensionsstabilen Schaumstoffen, wegen der Toxizität des Methylchlorids verbietet sich jedoch ihr Einsatz. Ersetzt man Methylchlorid durch das etwas weniger toxische Ethylchlorid, so entsteht ein relativ weicher Schaum mit niedriger Druckfestigkeit. Auch Kohlendioxid ist bereits als Treibmittel empfohlen worden. Sein Einsatz führt jedoch zu offenzelligen Schaumstoffen, die ein hohes Wasseraufnahmevermögen besitzen.

Die Aufgabe der Erfindung besteht darin, ein Verfahren zur Herstellung von Schaumstoffen aus Styrolpolymerisaten aufzuzeigen, bei dem keine toxischen Treibmittel verwendet werden und das zu Schaumstoffen mit geschlossenen Zellen führt, die nur ein geringes Wasseraufnahmevermögen besitzen, die dimensionsstabil sind und eine hohe Druckfestigkeit und Wärmeformbeständigkeit aufweisen. Weiterhin ist es Aufgabe der Erfindung, auf die Verwendung von Dichlordifluormethan im Schaumstoff zu verzichten, da dieser Stoff angeblich in der Atmosphäre die Wirksamkeit der Ozonschicht als Solarschirm vermindert.

Die Aufgabe der Erfindung wird gelöst durch die Verwendung eines Treibmittelgemisches enthaltend einen Alkohol mit einem Siedepunkt zwischen 56 und 100°C, Kohlendioxid sowie gegebenenfalls einen gesättigten $C_3$- bis $C_5$-Kohlenwasserstoff und/oder einen zwischen -30° und +30°C siedenden, Wasserstoff enthaltenden Fluorchlor- oder Fluorkohlenwasserstoffs.

Die GB-A 1,230,992 beschreibt ein Verfahren zur Herstellung von Schaumfolien aus thermoplastischen Polymeren mit Hilfe eines Treibmittelgemisches, dessen 1. Komponente u.a. ein Keton und dessen 2. Komponente u.a. Kohlendioxid sein kann.

Gegenstand der Erfindung ist somit ein Verfahren zur Herstellung von Schaumstoffplatten mit hoher Druckfestigkeit und einem Querschnitt von mindestens 50 cm$^2$ durch Extrusion eines Gemisches aus einem Styrolpolymerisat, 5 bis 16 Gew.-%, bezogen auf das Styrolpolymerisat, eines Treibmittels sowie gegebenenfalls üblichen Zusatzstoffen, dadurch gekennzeichnet, daß man als Treibmittel ein Gemisch verwendet, welches

a) 3 bis 70 Gew.-% eines Alkohols mit einem Siedepunkt zwischen 56 und 100°C

b) 5 bis 50 Gew.-% Kohlendioxid und

c) 0 bis 90 Gew.-% eines gesättigten $C_3$- bis $C_5$-Kohlenwasserstoffs und/oder eines zwischen -30° und +30°C siedenden, Wasserstoff enthaltenden Fluorchlor- oder Fluorkohlenwasserstoffs

enthält.

Styrolpolymerisate im Sinne dieser Erfindung sind Polystyrol und Mischpolymerisate des Styrols, die mindestens 50 Gew.% Styrol einpolymerisiert enthalten. Als Comonomere kommen z.B. in Betracht $\alpha$-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat.

Das Treibmittel wird in einer Menge von 5 bis 16 Gew.%, vorzugsweise 7 bis 15 Gew.%, insbesondere 8 bis 14 Gew.%, bezogen auf das Styrolpolymerisat, verwendet. Es enthält

a) 3 bis 70 Gew.-%, vorzugsweise 5 bis 60 Gew.% eines Alkohols mit einem Siedepunkt zwischen 56 und 100°, vorzugsweise zwischen 56 und 85°C, wie Methanol, Ethanol, Propanol, Isopropanol, tert.-Butanol oder Isobutanol,

b) 5 bis 50 Gew.-%, vorzugsweise 5 bis 45 Gew.%, insbesondere 10 bis 40 Gew.-% Kohlendioxid sowie gegebenenfalls

c) 0 bis 90 Gew.%, vorzugsweise 10 bis 70 Gew.%, insbesondere 10 bis 60 Gew.% eines gesättigten $C_3$-$C_5$-Kohlenwasserstoffs, wie Propan, n-Butan, i-Butan, Neopentan, n-Pentan oder i-Pentan oder deren Gemische und/oder eines zwischen -30° und +30°C siedenden, Wasserstoffatome enthaltenden Fluorchlor- oder Fluorkohlenwasserstoffs, wie Fluordichlormethan, 1,1-Difluor-1-chlorethan, 1-Fluor-1,1-dichlorethan, Tetrafluorethan.

Die optimale Zusammensetzung des Treibmittelgemisches läßt sich leicht durch Vorversuche ermitteln. Besonders vorteilhafte Ergebnisse werden mit einem Treibmittelgemisch aus Ethanol, $CO_2$ und 1,1-Difluor-1-chlorethan im Gewichtsverhältnis 3 bis 25 : 5 bis 27 : 70 bis 90 erzielt, welches gegebenenfalls noch bis zu 30 Gew.-% gesättigte $C_3$- bis $C_5$-Kohlenwasserstoffe enthält.

Besonders vorteilhaft sind chlorfreie Treibmittelgemische, da sie besonders umweltfreundlich sind. Derartige Gemische enthalten vorzugsweise 5 bis 70 Gew.-%, insbesondere 20 bis 60 Gew.-% Ethanol, 5 bis 40 Gew.-%, insbesondere 10 bis 37 Gew.-% Kohlendioxid, 10 bis 70 Gew.-%, insbesondere 10 bis 50 Gew.-% 1,1,1,2-Tetrafluorethan sowie gegebenenfalls bis zu 30 Gew.-% eines gesättigten $C_3$- bis $C_5$-Kohlenwasserstoffs, insbesondere Butan.

Die Verwendung von 1,1,1,2-Tetrafluorethan führt zu besonders feinzelligen Schaumstoffen selbst dann, wenn Keimbildner nur in einer Menge zwischen 0 und 0,005 Gew.-% mitverwendet werden. Erhöht man jedoch den Anteil dieser Komponente im Treibmittelgemisch auf über 70 Gew.-%, so ist das Aufschäumverhalten unbefriedigend.

Allerdings ist es auch möglich, auf die Verwendung von halogenhaltigen Treibmitteln zu verzichten. Besonders geeignete halogenfreie Treibmittelgemische enthalten 50 bis 70 Gew.-% eines Alkohols mit einem Siedepunkt zwischen 56 und 100 °C, und 30 bis 50 Gew.-% Kohlendioxid. Besonders bevorzugt sind hierbei Treibmittelgemische, die ausschließlich Ethanol und Kohlendioxid enthalten.

Erhöht man den Anteil an Kohlendioxid im Treibmittelgemisch auf über 50 %, so erhält man stark offenzellige Schaumstoffe mit hohem Wasseraufnahmevermögen. Durch Zusatz von hohen Mengen an 1,1-Difluor-1-chlorethan kann das Wärmedämmvermögen des Schaumstoffs erhöht werden.

Als übliche Zusatzstoffe können dem Styrolpolymerisat-Treibmittel-Gemisch Antistatika, Stabilisatoren, Farbstoffe, Schmiermittel, Füllstoffe, Flammschutzmittel und/oder Keimbildner in üblichen Mengen zugesetzt werden.

Die Herstellung der Schaumstoffplatten erfolgt erfindungsgemäß in an sich bekannter Weise durch Extrusion. In einem Extruder wird das durch Erwärmen plastifizierte Styrolpolymerisat mit dem Treibmittelgemisch und den Zusatzstoffen innig vermischt. Das Gemisch durchläuft sodann eine Beruhigungszone, in der es unter ständigem Rühren auf eine Temperatur zwischen etwa 100 und 120 °C gekühlt und anschließend durch eine Düse zu Platten extrudiert wird.

Erfindungsgemäß weisen die Schaumstoffplatten einen Querschnitt von mindestens 50 cm², vorzugsweise mindestens 100 bis zu etwa 1000 cm² auf. Die Erfindung erlaubt die Herstellung von Platten der Dicke bis 160 mm, einer Breite bis 1200 mm und einer Dichte von 25 bis 60 g/l.

Die Erfindung wird anhand der folgenden Beispiele erläutert. Die in den Beispielen genannten Teile sind Gewichtsteile.

Beispiele 1 bis 18

100 Teile Polystyrol mit einem Schmelzindex von 4,5, 1,5 Teile Hexabromcyclododecan als Flammschutzmittel und 1 Teil Talkum zur Regelung der Zellgröße wurden einem Extruder mit einem inneren Schneckendurchmesser von 120 mm kontinuierlich zugeführt. Durch eine in den Extruder angebrachte Einlaßöffnung wurde gleichzeitig ein Treibmittelgemisch in den Extruder kontinuierlich eingedrückt. Das in dem Extruder gleichmäßig geknetete Gel wurde dann nach einer Verweilzeit von 15 Minuten auf eine Austrittstemperatur von 105 °C gekühlt und durch eine 300 mm breite und 1,5 mm weite Düse in die Atmosphäre extrudiert. Der Schaum wurde durch eine mit dem Extruder verbundenen Formkanal geführt, wobei eine geschäumte Polystyrolplatte mit einer Querschnittsgröße von 650 mm x 50 mm entstand. Das geschäumte Produkt wurde in Stücke mit einer Querschnittsfläche von 600 mm x 50 mm und einer Länge von 1250 mm geschnitten. Geprüft wurden die Proben nach einer Ablagerzeit von 30 Tagen. Der in der Tabelle 1 angegebene λ-Wert wurde aus Messungen nach 6 Monaten auf eine 2jährige Lagerzeit extrapoliert. Das Treibmittelgemisch für jedes Beispiel ist in der Tabelle aufgeführt. In den Beispielen 12 bis 18 wurde mit einem Talkum-Zusatz von 0,002 Gew.-% gearbeitet.

Gemessen wurde der λ-Wert (Wärmeleitzahl) nach DIN 52 612, die Schaumstoffdichte nach DIN 53 420, die Zellgröße nach ASTM D 3842-69, die geschlossenen Zellen nach DIN-ISO 4590, die Wasseraufnahme an ganzen Platten nach DIN 53 434, die Druckfestigkeit nach DIN 53 421 und die Dimensionsstabilität nach DIN 53 431.

Tabelle

| Beispiel | Treibmittelmenge Gew.-% bezogen auf Polystyrol | $CF_2ClCH_3$ Gew.-% | $CF_3CFH_2$ Gew.-% | $CO_2$ Gew.-% | $C_2H_5OH$ Gew.-% | $C_4H_{10}$ Gew.-% | Wärmeleitzahl $\lambda$-Wert [W/m.K] |
|---|---|---|---|---|---|---|---|
| 1 | 9,3 | – | | 32,6 | 67,4 | – | 0,0348 |
| 2 | 13,6 | 85,3 | | 10,6 | 4,1 | – | 0,0260 |
| 3 | 12,3 | 75,8 | | 11,7 | 12,5 | – | 0,0273 |
| 4 | 13,1 | 70 | | 27 | 3 | – | 0,0275 |
| 7 | 10,3 | 70 | | 16.3 | 4,0 | 9,7 | 0,0305 |
| 11 (Vergleich) | 15,8 | 91,1 | | 6,3 | 2,6 | – | 0,0248 |
| 12 | 9,6 | | 35 | 17 | 31 | 17 | 0,0345 |
| 13 | 10,5 | | 52 | 17 | 31 | – | 0,0312 |
| 14 | 11,0 | | 30 | 20 | 25 | 25 | 0,0334 |
| 15 | 10,8 | | 70 | 10 | 20 | – | 0,0298 |
| 16 (Vergleich) | 8,4 | | 30 | 55 | 15 | – | 0,0352 |
| 17 | 10,52 | | 18,6 | 30,0 | 51,4 | | 0,0348 |
| 18 | 8,82 | | 24,2 | 36,4 | 39,4 | | 0,0351 |

Tabelle (Forts.)

| Beispiel | Schaumstoff-dichte g/l | Zellgröße mm | geschlossene Zellen % | Wasserauf-nahme Vol.% | Druckfestig-keit [N/mm$_2$] | Dimensionsstabilität bei 85°C in % | | |
|---|---|---|---|---|---|---|---|---|
| | | | | | | Länge | Breite | Dicke |
| 1 | 33,4 | 0,110 | 98,0 | 0,089 | 0,280 | + 1,23 | +0,84 | -0,53 |
| 2 | 35,6 | 0,137 | 97,8 | 0,105 | 0,372 | + 4,36 | +3,79 | -0,43 |
| 3 | 33,1 | 0,140 | 97,3 | 0,098 | 0,340 | + 2,67 | +3,77 | -0,04 |
| 4 | 29,9 | 0,243 | 95,6 | 0,178 | 0,180 | + 3,25 | +3,55 | -0,12 |
| 7 | 29,3 | 0,124 | 86,3 | 0,186 | 0,344 | + 1,32 | +0,65 | +0,04 |
| 11 (vgl.) | 33,2 | 0,145 | 97,2 | 0,110 | 0,332 | + 9,85 | +6,74 | +3,25 |
| 12 | 34,2 | 0,089 | 96,3 | 0,121 | 0,325 | + 1,31 | +1,42 | +0,31 |
| 13 | 35,4 | 0,056 | 97,3 | 0,096 | 0,334 | + 1,73 | +1,65 | +0,34 |
| 14 | 31,6 | 0,08 | 98,0 | 0,094 | 0,306 | + 0,93 | +1,42 | +0,21 |
| 15 | 34,7 | 0,063 | 95,6 | 0,154 | 0,372 | + 2,30 | +3,00 | +1,20 |
| 16 (vgl.) | 33,9 | 0,065 | 72,4 | 4,29 | 0,296 | + 1,43 | +1,53 | +0,23 |
| 17 | 34,2 | 0,074 | 97,5 | 0,092 | 0,321 | + 0,12 | -0,6 | +1,5 |
| 18 | 36,2 | 0,072 | 97,9 | 0,096 | 0,385 | + 0,15 | -0,7 | +2,0 |

## Patentansprüche

1. Verfahren zur Herstellung von Schaumstoffplatten mit hoher Druckfestigkeit und einem Querschnitt von mindestens 50 cm$^2$ durch Extrusion eines Gemisches aus einem Styrolpolymerisat, 5 bis 16 Gew.-%, bezogen auf das Styrolpolymerisat, eines Treibmittels sowie gegebenenfalls üblichen Zusatzstoffen, dadurch gekennzeichnet, daß man als Treibmittel ein Gemisch verwendet, welches

a) 3 bis 70 Gew.-% eines Alkohols mit einem Siedepunkt zwischen 56 und 100°C,

b) 5 bis 50 Gew.-% Kohlendioxid und

c) 0 bis 90 Gew.-% eines gesättigten $C_3$- bis $C_5$-Kohlenwasserstoffs und/oder eines zwischen -30° und +30°C siedenden, Wasserstoff enthaltenden Fluorchlor- oder Fluorkohlenwasserstoffs enthält.

2. Verfahren gemäß Anspruche 1, dadurch gekennzeichnet, daß das Treibmittelgemisch 5 bis 45 Gew.-% Kohlendioxid enthält.

3. Verfahren gemäß einem der Ansprüche 1 bis 2, dadurch gekennzeichnet, daß das Treibmittelgemisch 0 bis 30 Gew.-% Butan enthält.

4. Verfahren gemäß einem der Ansprüche 1 bis 3, dadurch gekennzeichnet, daß das Treibmittelgemisch 70 bis 90 Gew.-% 1,1-Difluor-1-chlorethan enthält.

5. Verfahren gemäß einem der Ansprüche 1 bis 3, dadurch gekennzeichnet, daß das Treibmittelgemisch 10 bis 70 Gew.-% 1,1,1,2-Tetrafluorethan enthält.

6. Verfahren gemäß Anspruch 1, dadurch gekennzeichnet, daß man ein Treibmittelgemisch verwendet, welches

a) 3 bis 25 Gew.-% Ethanol

b) 5 bis 27 Gew.-% Kohlendioxid und

c) 0 bis 30 Gew.-% eines gesättigten $C_3$- bis $C_5$-Kohlenwasserstoffs und 70 bis 90 Gew.-% 1,1-Difluor-1-chlorethan

enthält.

7. Verfahren gemäß Anspruch 1, dadurch gekennzeichnet, daß man ein Treibmittelgemisch verwendet, welches

a) 5 bis 70 Gew.-% Ethanol,

b) 5 bis 40 Gew.-% Kohlendioxid,

c) 10 bis 70 Gew.-% 1,1,1,2-Tetrafluorethan, und

d) 0 bis 30 Gew.-% eines gesättigten $C_3$- bis $C_5$-Kohlenwasserstoffs

enthält.

8. Verfahren gemäß Anspruch 1, dadurch gekennzeichnet, daß man ein Treibmittelgemisch verwendet, welches

a) 50 bis 70 Gew.-% eines Alkohols mit einem Siedepunkt zwischen 56 und 100°C und

b) 30 bis 50 Gew.-% Kohlendioxid

enthält.

9. Verfahren gemäß Anspruch 9, dadurch gekennzeichnet, daß als Komponente a) Ethanol verwendet wird.

**Claims**

1. A process for the production of foam boards having high compressive strength and a cross section of at least 50 cm$^2$ by extrusion of a mixture of a styrene polymer, from 5 to 16% by weight, based on the styrene polymer, of a blowing agent and, if desired, conventional additives, which comprises using, as blowing agent, a mixture comprising

a) from 3 to 70% by weight of an alcohol having a boiling point of from 56 to 100°C,

b) from 5 to 50% by weight of carbon dioxide and

c) from 0 to 90% by weight of a saturated $C_3$- to $C_5$-hydrocarbon and/or of a hydrogen-containing chlorofluorocarbon or fluorocarbon which boils at from -30 to +30°C.

2. A process as claimed in claim 1, wherein the blowing agent mixture contains from 5 to 45% by weight of carbon dioxide.

3. A process as claimed in either of claims 1 and 2, wherein the blowing agent mixture contains from 0 to 30% by weight of butane.

4. A process as claimed in one of claims 1 to 3, wherein the blowing agent mixture contains from 70 to 90% by weight of 1,1-difluoro-1-chloroethane.

5. A process as claimed in one of claims 1 to 3, wherein the blowing agent mixture contains from 10 to 70% by weight of 1,1,1,2-tetrafluoroethane.

6. A process as claimed in claim 1, wherein a blowing agent mixture is used which comprises
   a) from 3 to 25% by weight of ethanol,
   b) from 5 to 27% by weight of carbon dioxide and
   c) from 0 to 30% by weight of a saturated $C_3$- to $C_5$-hydrocarbon and from 70 to 90% by weight of 1,1-difluoro-1-chloroethane.

7. A process as claimed in claim 1, wherein a blowing agent mixture is used which comprises
   a) from 5 to 70% by weight of ethanol,
   b) from 5 to 40% by weight of carbon dioxide,
   c) from 10 to 70% by weight of 1,1,1,2-tetrafluoroethane and
   d) from 0 to 30% by weight of a saturated $C_3$- to $C_5$-hydrocarbon.

8. A process as claimed in claim 1, wherein a blowing agent mixture is used which comprises
   a) from 50 to 70% by weight of an alcohol having a boiling point of from 56 to 100°C and
   b) from 30 to 50% by weight of carbon dioxide.

9. A process as claimed in claim 8, wherein component a) is ethanol.

**Revendications**

1. Procédé pour la préparation de plaques de matière alvéolaire ayant une résistance élevée à la pression et une section transversale d'au moins 50 cm², par extrusion d'un mélange d'un polymère de styrène, de 5 à 16 % en poids, par rapport au polymère de styrène, d'un agent gonflant, ainsi qu'éventuellement d'additifs classiques, caractérisé en ce qu'on utilise comme agent gonflant un mélange contenant:
   a) 3 à 70 % en poids d'un alcool ayant un point d'ébullition entre 56 et 100°C,
   b) 5 à 50 % en poids de dioxyde de carbone et
   c) 0 à 90 % en poids d'un hydrocarbure saturé en $C_3$ à $C_5$ et/ou d'un hydrocarbure fluorochloré ou fluoré contenant de l'hydrogène et bouillant entre -30° et +30°C.

2. Procédé selon la revendication 1, caractérisé en ce que le mélange constituant l'agent gonflant contient 5 à 45 % en poids de dioxyde de carbone.

3. Procédé selon l'une des revendications 1 ou 2, caractérisé en ce que le mélange constituant l'agent gonflant contient 0 à 30 % en poids de butane.

4. Procédé selon l'une quelconque des revendications 1 à 3, caractérisé en ce que le mélange constituant l'agent gonflant contient 70 à 90 % en poids de 1,1-difluoro-1-chloroéthane.

5. Procédé selon l'une quelconque des revendications 1 à 3, caractérisé en ce que le mélange constituant l'agent gonflant contient 10 à 70 % en poids de 1,1,1,2-tétrafluoroéthane.

6. Procédé selon la revendication 1, caractérisé en ce qu'on utilise un mélange pour agent gonflant qui contient
   a) 3 à 25 % en poids d'éthanol
   b) 5 à 27 % en poids de dioxyde de carbone et
   c) 0 à 30 % en poids d'un hydrocarbure saturé en $C_3$ à $C_5$ et 70 à 90 % en poids de 1,1-difluoro-1-chloroéthane.

7. Procédé selon la revendication 1, caractérisé en ce qu'on utilise un mélange pour agent gonflant qui contient
   a) 5 à 70 % d'éthanol,
   b) 5 à 40 % en poids de dioxyde de carbone,
   c) 10 à 70 % en poids de 1,1,1,2-tétrafluoroéthane, et
   d) 0 à 30 % en poids d'un hydrocarbure saturé en $C_3$ à $C_5$.

8. Procédé selon la revendication 1, caractérisé en ce qu'on utilise un mélange pour agent gonflant qui contient
   a) 50 à 70 % en poids d'un alcool ayant un point d'ébullition compris entre 56 et 100°C et
   b) 30 à 50 % en poids de dioxyde de carbone.

9. Procédé selon la revendication 8, caractérisé en ce qu'on utilise comme constituant a) de l'éthanol.